# EUROPÄISCHE PATENTSCHRIFT

(11) **EP 0 701 023 B1**
(45) Veröffentlichungstag und Bekanntmachung des Hinweises auf die Patenterteilung: **09.01.2002**
(21) Anmeldenummer: 94202507.3
(22) Anmeldetag: 02.09.1994
(51) Int. Cl.: E01C 19/52, B62B 1/04, B62B 1/06

(54) **Vorrichtung für den Transport und das Verlegen plattenförmiger Strassenpflasterung**
Apparatus for transporting and placing slab-like paving elements
Dispositif pour le transport et la mise en place d'éléments en forme de panneaux d'un pavage

(43) Veröffentlichungstag der Anmeldung: 13.03.1996
(73) Patentinhaber: Spekman, Hermanus Willem Johannes, NL-2441 CB Nieuwveen (NL)
(72) Erfinder: Spekman, Hermanus Willem Johannes, NL-2441 CB Nieuwveen (NL)
(74) Vertreter: de Vries, Erik Eduard

(56) Entgegenhaltungen:
- DE-U- 9 102 053
- GB-A- 2 172 249
- GB-A- 2 182 307
- NL-A- 9 300 947
- US-A- 4 049 284

## Beschreibung

Die Erfindung bezieht sich auf eine Vorrichtung gemäß Oberbegriff des Anspruchs 1. Eine ähnliche Maschine kennen wir aus der niederländischen Patentschrift NL-A-157366. Dieses bekannte Gerät ist geeignet, schwere Pflasterelemente in vertikaler Lage zu transportieren und an den Bestimmungsort zu legen.
Die Vorrichtung besteht aus einem auf zwei Rädern stehenden Gestell und einer vertikal und horizontal kippbaren Klemmvorrichtung, welche aus beweglichen Klemmplatten besteht.

In GB-A-2 172 249 ist eine Vorrichtung für den Transport und das Verlegen plattenförmiger Straßenpflasterung beschrieben. Der feststehende Teil der Klemmvorrichtung enthält eine sich in Gebrauchslage vertikal erstreckende flache Platte, deren Länge einige Male grösser ist als die Höhe der Straßenpflasterung. Beim Angreifen soll das Bedienungspersonal darauf achten, daß der Unterteil die Platte beabstandet von der Unterseite der Platte angreift, damit die Platten anschließend gegeneinander verlegt werden können.
Die Erfindung zielt auf eine Maschine, mit der es möglich wird, Pflasterelemente aus horizontaler Position festzuklemmen, hochzuheben und am Bestimmungsort auf einem zuvor geglätteten Sandbett wieder abzulegen.
Ausführung A der Vorrichtung wird bei schweren Betonpflasterelementen in den Formaten 40cm x 40cm, 50cm x 50cm, 40cm x 60cm usw. verwendet. Ausführung B der Maschine ist vor allem für das Anlegen von Bürgersteigen geeignet.

Wir sind der Ansicht, daß die vorliegende Erfindung die Arbeitsbedingungen bedeutend verbessert und die körperliche Anstrengung, welche einen Teil der Tätigkeit ausmacht, in entscheidendem Maße verringert wird. Die Vorrichtung ist sehr beweglich und ermöglicht dem Straßenbauer eine nahezu senkrechte Sicht auf den Arbeitsplatz. Dies erleichert die korrekte Positionierung der Steinplatte in bezug auf die bereits gelegten Platten. Die Konstruktion des Geräts ist unkompliziert, es ist billig zu produzieren, wodurch es für die Vermietungsbranche prädestiniert ist. Modell A läßt sich leicht zu einem Steckkarren umbauen - es kann also multifunktional eingesetzt werden.

Die Maschine zeichnet sich dadurch aus, daß der eine Teil der Klemmvorrichtung an der Unterseite des Gestells befestigt ist, während der andere Teil in einem bestimmten Abstand davon mit einem Scharnier am Gestell angebracht ist. Diese Konstruktion ermöglicht es, den Abstand zwischen den Klemmelementen zu vergrößern, indem man das Gestell nach vorne kippt oder ihn zu verkleinern, indem man dieses nach hinten kippt. Wird das Gestell mit dem festen Klemmelement gegen eine Steinplatte gesetzt, wonach es nach vorne gekippt wird, fällt das bewegliche Klemmelement über die Steinplatte. Das Gestell wird nun nach hinten gekippt, wobei die Platte festgeklemmt und ein wenig hochgehoben wird. Beim nach hinten kippen muß das Gestell an der Unterseite blockiert werden, dies ist leicht zu bewerkstelligen, indem man einen Fuß auf die Radachse setzt. Die Steinplatte kann jetzt transportiert werden. Am Bestimmungsort wird die Maschine wieder nach vorne gekippt und zwar so, daß die Steinplatte an der Seite des festen Klemmelements gegen die bereits fertiggestellte Pflasterung anliegt. Indem man das Gestell in zunehmenden Maße vornüber kippt, berührt die Steinplatte mit der Vorderseite den Untergrund. Da Klemm- und Reibungskraft abnehmen, indem sich der Abstand der Klemmelemente vergrößert, fällt die Steinplatte zu einem bestimmten Zeitpunkt auf ihren Platz, wobei die Platten sehr eng aneinander anschließen. Die Vorrichtung kann nun weggenommen werden, indem man das bewegliche Klemmelement mit dem Fuß hochhebt.

Die Erfindung soll anhand der folgenden Zeichnungen verdeutlicht werden:
Fig. 1 zeigt Modell A in Seitenansicht;
Fig. 2 zeigt Modell A in Hinteransicht;
Fig. 3-5 zeigen Modell A bei verschiedenen Arbeitsgängen;
Fig. 6 zeigt Modell A umgebaut zu einem Steckkarren;
Fig. 7 zeigt einen Durchschnitt der Seitenansicht von Modell B;
Fig. 8 zeigt Modell B in Hinteransicht.
Bezugszahlen von übereinstimmenden Konstruktionsteilen werden für Modell B in Klammern angegeben.

Die Erfindung besteht aus einem Rahmen 1 (16), welcher auf Rädern 9 (19) ruht und an der Unterseite mit einem festen Klemmelement 3 (13) ausgestattet ist. In einigem Abstand vom festen Klemmelement 3 (13) befindet sich am Rahmen 1 (16) ein Gelenklager 7 (17), an dem das Klemmelement 4 (14) gelenkig befestigt ist. Vorkehrungen 8 (20) begrenzen die Bewegungsfreiheit des Klemmelements 4 (14) in folgender Hinsicht:
- Die Vorrichtung bleibt in einem bestimmten Ruhestand stehen, ruhend einerseits auf den Rädern 9 (19) und andererseits auf der Außenkante des beweglichen Klemmelements 4 (14).
- Das rücklings Kippen des Gestells bewirkt ein Mitkippen der beweglichen Teilklemme 4 (14) zu einem bestimmten Zeitpunkt.
Anschlagnocken 2 (12) sorgen erfindungsgemäß dafür, daß die feste Teilklemme 3 (13) die Platte 5 (15) nicht zu tief aufgreift.

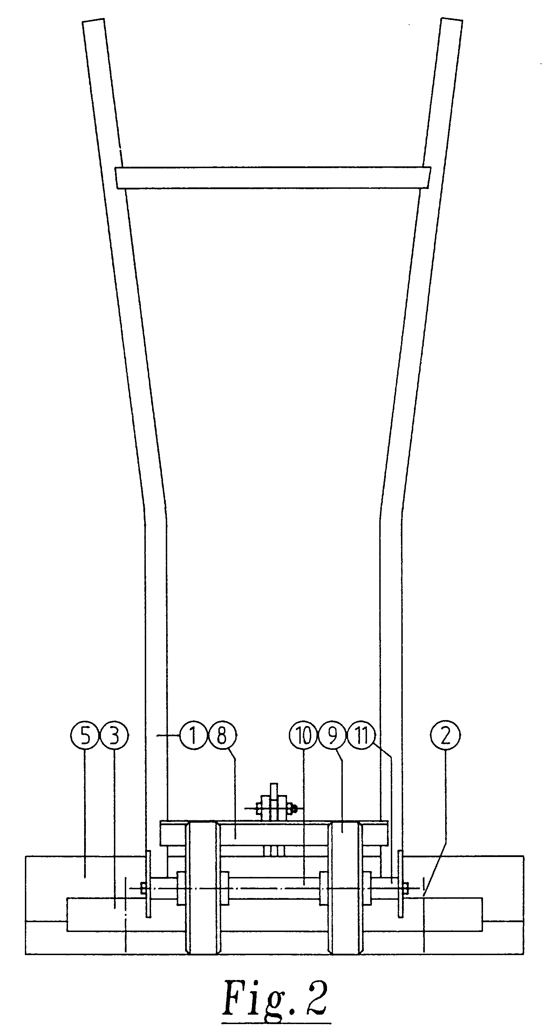

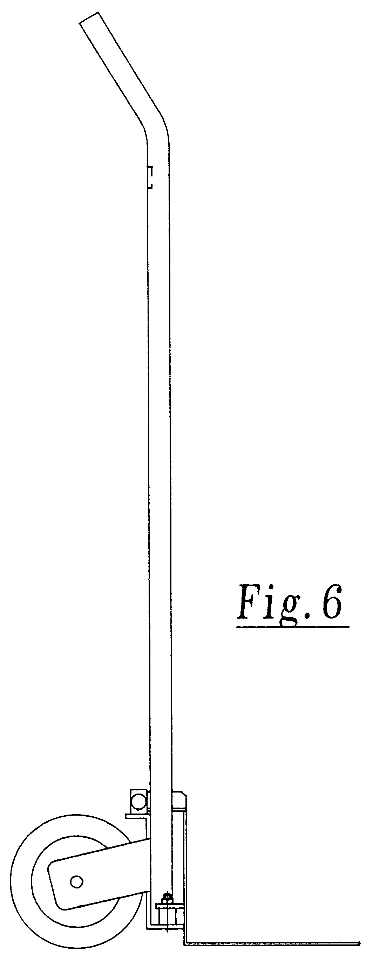

Bei Modell A (s.Fig. 2) können Abstandsbuchsen 11 zwischen Abstandsbuchse 10 und den Rädern angebracht werden. Radstand und somit Stabilität werden hierdurch vergrößert, was vor allem wünschenswert ist, wenn man das Gestell zu einem Steckkarren umbaut (s. Fig. 6).

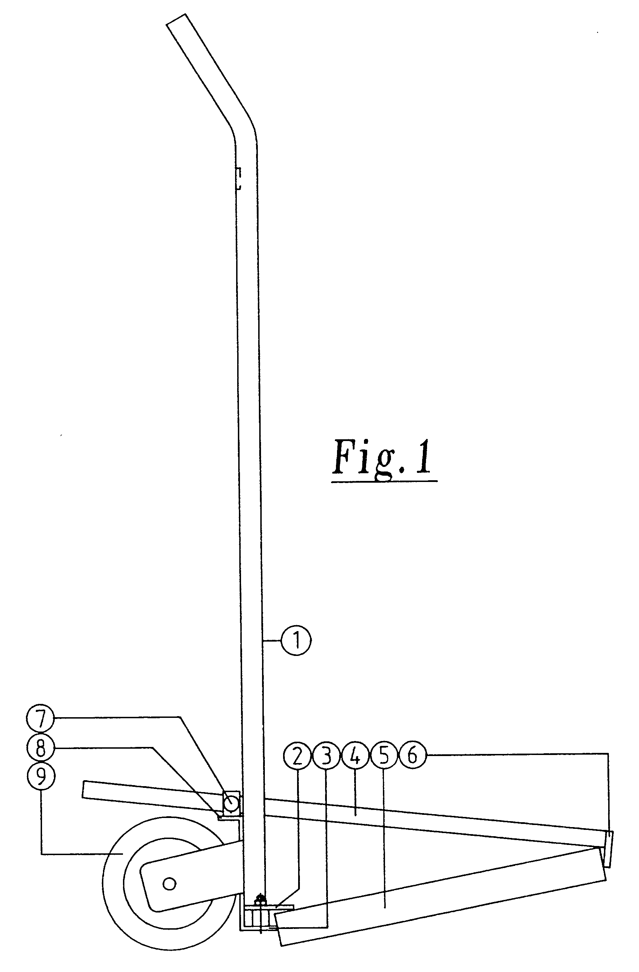

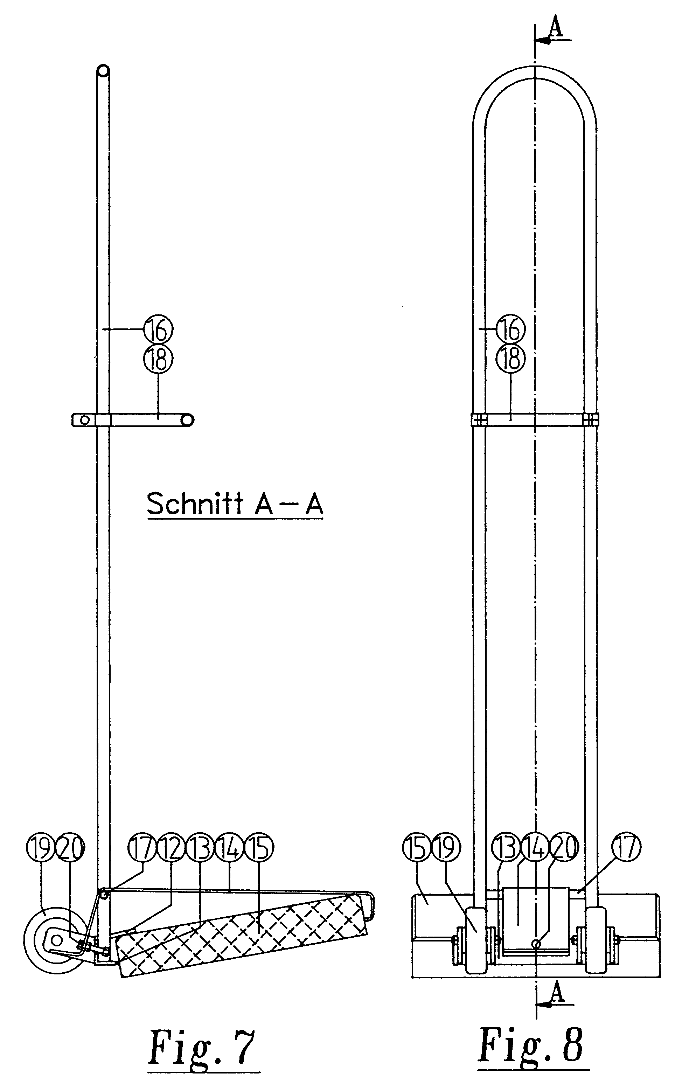

Der kleine Achsenstand ist unablässig beim Legen bestimmter Muster, wie z.B. dem sogenannten Mühlenflügel, bei dem vier Platten des Formats 60 cm x 40 cm ein Quadrat von 100 cm x 100 cm bilden. Der bei diesem Muster verwendbare Radstand beträgt maximal 20 cm. Das bewegliche Klemmelement 4 (s. Fig. 1) ist verstellbar, wodurch dieses an die unterschiedlichen Plattenformate angepaßt werden kann. Mithilfe von Handgriff 18 (Fig. 7 + 8) wird das Gerät zu einer tragbaren Vorrichtung, wobei man die Platten mittragen kann. Es können auch Modelle ohne Räder hergestellt werden, falls die Platten nur in einem geringen Abstand neu verlegt werden müssen.

Die Erfindung funktioniert folgendermaßen:

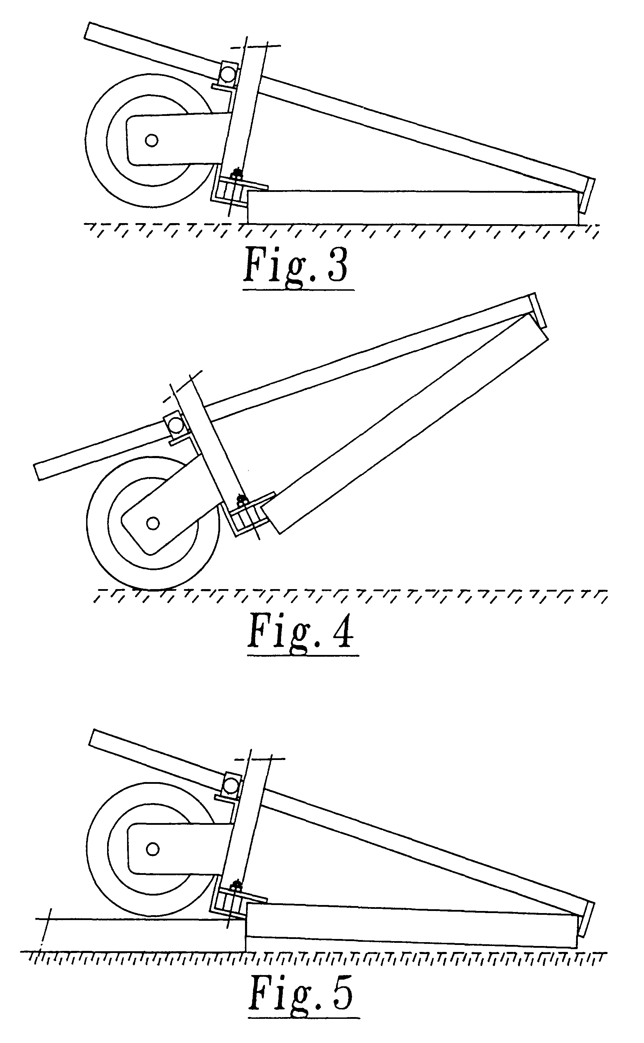

Die zu verlegenden Steinplatten werden in vertikaler Lage in Paketen geliefert. Die Platte, die von der Vorrichtung aufgehoben werden muß, muß zuerst in horizontale Lage gebracht werden. Auf einfache Weise kann man mit dem Fuß oder mit der Hand die Platte umkippen und sie beispielsweise auf eine Gummimatte fallen lassen. Nun wird das Gerät so positioniert, daß das feste Klemmelement 3 an der Steinplatte anliegt. Indem man das Gestell vornüber kippt, fällt das bewegliche Klemmelement 4 in einem bestimmten Moment über die Platte (s. Fig. 3). Die Platte wird geringfügig hochgehoben, indem man die Vorrichtung nun nach hinten kippt, wobei ein Fuß auf die Radachse drückt (s. Fig. 4). Das Gerät wird nun mit der festgeklemmten Steinplatte über die bereits gepflasterte Fläche zum Bestimmungsort gefahren.
Die eingeklemmte Platte wird nun so gegen die bereits verlegten Steinplatten angelegt, wie es in Figur 5 dargestellt ist. Kippt man das Gestell nun vornüber, wird zunächst die Vorderkante der Platte den Boden berühren, wonach die Platte als Ganze auf ihren Platz fallen wird. Sollte die zu verlegende Platte mit der Unterkante der linken oder rechten Ecke auf der bereits verlegten Pflasterung aufliegen, was bei falscher Positionierung leicht geschieht, kann man die Platte leicht in eine gute Position bringen, wenn man die Vorrichtung etwas hin und zurück kippt. Die Klemm- und Reibungskräfte nehmen abwechselnd zu und ab, wodurch sich die in bezug auf das feste Klemmelement in Längsrichtung verschiebt, bis die Platte perfekt auf ihrem Platz liegt.

Will man bereits bestehende Pflasterung entfernen, muß man einen bestimmten Abstand zwischen den zu entfernenden Platten und der übrigen Pflasterung schaffen, was sich leicht mit einem Spaten oder einer Plattenschaufel bewerkstelligen läßt. Die Vorrichtung wird nun so in Position gebracht, daß das unbewegliche Klemmelement an der zu entfernenden Platte anliegt, wobei sich die Räder im Sandbett befinden. Beim nach vorne Kippen wird das bewegliche Element zwischen den gerade geschaffenen Raum fallen. Nach dem Hochheben der Platte dreht man das Gerät im Sandbett und zieht es rückwärts auf die vorhandene Pflasterung. Es besteht die Möglichkeit, die Platten mit geringem Kraftaufwand zu stapeln, indem man die Vorrichtung abwechselnd vom einen auf das andere Rad kippen läßt, wodurch Höhenunterschiede stufenweise überbrückbar sind.

## Patentansprüche

1. Vorrichtung für das Transportieren und Verlegen plattenförmiger Straßenpflasterelemente, bestehend aus einem mit der Hand fahrbaren, auf zwei Rädern (9, 19) ruhenden Gestell (1, 16) mit einem Handgriff, welches mit einer Klemmvorrichtung zum Festklemmen der Straßenpflasterelemente (5, 15) ausgestattet ist, wobei ein Teil (3, 13) der Klemmvorrichtung an der Unterseite des Gestells (1, 16) befestigt ist, während der andere Teil (4, 14) der Klemmvorrichtung in einigem Abstand hiervon gelenkig am Gestell (1, 16) befestigt ist, **dadurch gekennzeichnet, daß** der feststehende Teil (3, 13) der Klemmvorrichtung derart mit zwei Anschlagnocken (2, 12) ausgestattet ist, daß der feststehende Teil (3, 13) das Straßenpflasterelement (5, 15) nicht zu tief aufgreift.

2. Vorrichtung gemäß Anspruch 1, **dadurch gekennzeichnet, daß** das bewegliche Klemmelement (4, 14) in der Länge verstellbar ist.

3. Vorrichtung gemäß einem der vorhergehenden Ansprüche, **dadurch gekennzeichnet, daß** das bewegliche Klemmelement (4, 14) durch eine Ausstattung (8, 20) in der Bewegungsfreiheit eingeschränkt wird.

4. Vorrichtung gemäß einem der vorhergehenden Ansprüche, **dadurch gekennzeichnet, daß** das bewegliche Klemmelement (4, 14) austauschbar ist durch das Zubehör für den Steckkarren.

5. Vorrichtung gemäß einem der vorhergehenden Ansprüche, **dadurch gekennzeichnet, daß** der Achsenstand verstellbar ist.

6. Vorrichtung gemäß einem der vorhergehenden Ansprüche, **dadurch gekennzeichnet, daß** der Handgriff (18) verstellbar ist.

## Claims

1. Apparatus for transporting and placing slab-like paving elements, the apparatus consisting of a frame (1, 16) that can be moved by hand, rests on two wheels (9, 19) and has a handle and which is fitted with a clamping arrangement for clamping the paving elements (5, 15), with a portion (3, 13) of the clamping arrangement being secured to the underside of the frame (1, 16), whilst the other portion (4, 14) of the clamping arrangement is secured at some distance therefrom and so as to be articulated on the frame (1, 16), **characterized in that** the fixed portion (3, 13) of the clamping arrangement is fitted with two stop cams (2, 12) in such a way that the fixed portion (3, 13) does not grip the paving element (5, 15) at too deep a point.

2. Apparatus according to claim 1, **characterized in that** the length of the movable clamping element (4, 14) is adjustable.

3. Apparatus according to one of the preceding claims, **characterized in that** the freedom of movement of the movable clamping element (4, 14) is limited by a fitting (8, 20).

4. Apparatus according to one of the preceding claims, **characterized in that** the moveable clamping element (4, 14) can be replaced by the accessories for the insert-cart.

5. Apparatus according to one of the preceding claims, **characterized in that** the axle base is adjustable.

6. Apparatus according to one of the preceding claims, **characterized in that** the handle (18) is adjustable.

## Revendications

1. Dispositif pour transporter et poser des éléments de pavage en forme de plaques, constitué par un châssis (1, 16) qui est déplaçable à la main, repose sur deux roues (9, 19) et comporte une poignée, qui est équipée d'un dispositif de serrage servant à serrer fermement les éléments de pavage (5, 15), une partie (3, 13) du dispositif de serrage étant fixée sur le côté inférieur du châssis (1, 16), tandis que l'autre partie (4, 14) du dispositif de serrage est fixée de façon articulée au chassis (1, 16) à une certaine distance de la première partie, **caractérisé en ce que** la partie fixe (3, 13) du dispositif de serrage est équipée de deux cames de butée (2, 12) de telle sorte que la partie fixe (3, 13) ne saisisse pas à un niveau trop bas l'élément de pavage (5, 15).

2. Dispositif selon la revendication 1, **caractérisé en ce que** l'élément de serrage mobile (4, 14) a une longueur réglable.

3. Dispositif selon l'une des revendications précédentes, **caractérisé en ce que** la liberté de déplacement de l'élément de serrage mobile (4, 14) est limitée par un équipement (8, 20).

4. Dispositif selon l'une des revendications précédentes, **caractérisé en ce que** l'élément de serrage mobile (4, 14) peut être remplacé par les accessoires pour le chariot d'emboîtement.

5. Dispositif selon l'une des revendications précédentes, **caractérisé en ce que** l'écartement des roues est réglable.

6. Dispositif selon l'une des revendications précédentes, **caractérisé en ce** la poignée (18) est réglable.
